(19) Europäisches Patentamt / European Patent Office / Office européen des brevets

(11) **EP 4 711 429 A1**

(12) **EUROPEAN PATENT APPLICATION**
published in accordance with Art. 153(4) EPC

(43) Date of publication:
**18.03.2026 Bulletin 2026/12**

(21) Application number: **24803546.1**

(22) Date of filing: **10.05.2024**

(51) International Patent Classification (IPC):
**C09D 175/04** (2006.01)   **C09D 5/16** (2006.01)
**C09D 7/61** (2018.01)   **C09D 7/63** (2018.01)
**C09D 183/10** (2006.01)

(52) Cooperative Patent Classification (CPC):
**C09D 5/16; C09D 7/61; C09D 7/63; C09D 175/04; C09D 183/10**

(86) International application number:
**PCT/JP2024/017485**

(87) International publication number:
**WO 2024/232438 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.05.2023 JP 2023077645**

(71) Applicant: **Kansai Paint Co., Ltd.**
**Amagasaki-shi, Hyogo 661-8555 (JP)**

(72) Inventors:
• **HIRAMOTO, Yuya**
  **Hiratsuka-shi, Kanagawa 254-8562 (JP)**
• **NAGAI, Akinori**
  **Hiratsuka-shi, Kanagawa 254-8562 (JP)**
• **SUGAMOTO, Keiji**
  **Hiratsuka-shi, Kanagawa 254-8562 (JP)**

(74) Representative: **Gill Jennings & Every LLP**
**The Broadgate Tower**
**20 Primrose Street**
**London EC2A 2ES (GB)**

(54) **COATING KIT, THERMOSETTING COATING COMPOSITION, MAIN AGENT FOR THERMOSETTING COATING COMPOSITION, COATING FILM FORMING METHOD, AND COATED ARTICLE**

(57)     The purpose of the present invention is to provide a coating kit for a thermosetting coating composition that forms a removable coating film that allows graffiti to be removed easily and cleanly in curing at from low temperature to conventional temperature. The present invention is a coating kit for a thermosetting coating composition comprising a main agent that contains an acrylic polyol (A) having an alkoxysilyl group and a curing agent that contains a polyisocyanate compound (B) containing an isocyanurate trimer, wherein the minimum value $E'_{min}$ of the storage modulus in the 40-200°C range of a coating film formed by curing a thermosetting coating composition obtained from the coating kit by heating for 30 minutes at 80°C and allowing to stand for one hour is $2.6 \times 10^7$ Pa or more.

EP 4 711 429 A1

**Description**

FIELD

The present invention relates a coating material kit, a heat-curable coating composition, a base agent for a heat-curable coating composition, a coating film forming method, and a coated article.

BACKGROUND

Human-made graffiti on various building structures, railway vehicles, and large vehicles not only mars aesthetics and landscape but also contributes to deterioration in public safety, and thus is a significant social issue. However, the work of removing graffiti drawn on surfaces with spray paint and oil-based pens is time-consuming and labor-intensive, clean removal is difficult, and there is a risk of damaging any existing coating. Therefore, there has been a demand for a coating composition having removability that allows graffiti to be removed easily and cleanly. In addition, there has also been a demand in recent years for a coating composition that forms a coating film at lower curing temperature and in shorter curing time in order to reduce energy costs.

PTL 1 discloses a coating composition containing a resin (A) having a hydroxyl group and an alkoxysilyl group, a curing agent (B), and an acrylic resin-coated silica particles (C) dispersion, wherein the acrylic resin-coated silica particles (C) dispersion is an acrylic resin-coated silica particles (C) dispersion that is a reaction product of silica particles (c1) having a polymerizable unsaturated group and a polymerizable unsaturated monomer mixture (c2), and the polymerizable unsaturated monomer mixture (c2) comprises, at least as a portion of components thereof, a polymerizable unsaturated monomer (c21) having a polysiloxane structure represented by formula (I) and an alkoxysilyl group-containing polymerizable unsaturated monomer (c22), and describes that the coating composition can form a coating film having excellent stain removal property, abrasion resistance, and transparency.

[CITATION LIST]

[PATENT LITERATURE]

[PTL 1] International Publication No. WO 2021/131444

SUMMARY

[TECHNICAL PROBLEM]

In the coating composition of PTL 1, when cured at a low temperature, stain removal property was sometimes insufficient.

An object of the present invention is to provide a coating material kit for a heat-curable coating composition that can form a coating film having removability that allows graffiti to be removed easily and cleanly when cured at temperatures ranging from low to conventional temperatures.

[SOLUTION TO PROBLEM]

The present inventors have carried out intensive studies in order to achieve the above-mentioned object, and as a result, have discovered that the above-mentioned object can be achieved by a coating material kit for a heat-curable coating composition, comprising a base agent containing an acrylic polyol (A) having an alkoxysilyl group; and a curing agent component containing a polyisocyanate compound (B), wherein a minimum value $E'_{min}$ of storage modulus in a range of 40 to 200°C of a coating film formed by heat-curing the heat-curable coating composition obtained from the coating material kit at 80°C for 30 minutes and leaving the heat-curable coating composition to stand for 1 hour is $2.6 \times 10^7$ Pa or more, and thus have completed the present invention. Specifically, the present invention provides the following coating material kit, heat-curable coating composition, base agent of a heat-curable coating composition, coating film forming method, and coated article.

Item 1. A coating material kit for a heat-curable coating composition, comprising a base agent containing an acrylic polyol (A) having an alkoxysilyl group; and a curing agent component containing a polyisocyanate compound (B) containing an isocyanurate trimer,

wherein a minimum value $E'_{min}$ of storage modulus in a range of 40 to 200°C of a coating film formed by heat-curing the heat-curable coating composition obtained from the coating material kit at 80°C for 30 minutes and leaving the heat-curable coating composition to stand for 1 hour is $2.6 \times 10^7$ Pa or more.

Item 2. The coating material kit according to Item 1, further containing at least one catalyst compound (C) selected from an amidine compound, a guanidine compound, a phosphazene compound, and an imidazole compound.

Item 3. The coating material kit according to Item 1 or 2, further containing a silicone (D) modified with a hydroxyl group-containing resin.

Item 4. The coating material kit according to any one of Items 1 to 3, further containing an organic solvent-dispersed type colloidal silica (E).

Item 5. The coating material kit according to any one of Items 1 to 4, wherein the coating film has stain resistance.

Item 6. A heat-curable coating composition comprising a base agent containing an acrylic polyol (A) having an alkoxysilyl group; and a curing agent containing a polyisocyanate compound (B) containing an isocyanurate trimer, wherein a minimum value $E'_{min}$ of storage modulus in a range of 40 to 200°C of a coating film formed by heat-curing the heat-curable coating composition at 80°C for 30 minutes and leaving the heat-curable coating composition to stand for 1 hour is $2.6 \times 10^7$ Pa or more.

Item 7. A base agent for a heat-curable coating composition comprising the base agent containing an acrylic polyol (A) having an alkoxysilyl group; and a curing agent containing a polyisocyanate compound (B) containing an isocyanurate trimer,

wherein a minimum value $E'_{min}$ of storage modulus in a range of 40 to 200°C of a coating film formed by heat-curing the heat-curable coating composition at 80°C for 30 minutes and leaving the heat-curable coating composition to stand for 1 hour is $2.6 \times 10^7$ Pa or more.

Item 8. A coating film forming method, comprising a coating film forming step of coating an object to be coated with the heat-curable coating composition obtained from the coating material kit according to any one of Items 1 to 5, the heat-curable coating composition according to Item 6, or a heat-curable coating composition obtained by mixing the base agent according to Item 7 and a curing agent to form a wet coating film.

Item 9. The coating film forming method according to Item 8, comprising a step of heat-curing the wet coating film at a temperature range of 50°C or higher and 120°C or lower.

Item 10. The coating film forming method according to Item 8 or 9, wherein the object to be coated is at least one selected from an automobile, industrial machinery, construction machinery, a railway vehicle, a ship body, a building material, residential facility equipment, and a component of the aforementioned.

Item 11. A coated article obtained by coating an object to be coated with the heat-curable coating composition obtained from the coating material kit according to any one of Items 1 to 5, the heat-curable coating composition according to Item 6, or a heat-curable coating composition obtained by mixing the base agent according to Item 7 and a curing agent.

## [ADVANTAGEOUS EFFECTS OF INVENTION]

According to the coating material kit of the present invention, a coating film that allows graffiti to be easily and cleanly removed when cured at temperatures ranging from low to conventional temperatures can be formed.

## DESCRIPTION OF EMBODIMENTS

Hereinafter, aspects for embodying the present invention will be described in detail. The present invention is not limited to the following embodiments, and also includes various modified examples embodied in a range that does not deviate from the gist of the present invention. In the present specification, "part" refers to "part by mass", and "%" to % by mass.

[Acrylic polyol (A) having alkoxysilyl group]

The coating material kit for a heat-curable coating composition of the present invention (hereinafter, sometimes simply referred to as "coating material kit") comprises, as a component in the base agent, an acrylic polyol (A) having an alkoxysilyl group. For the content of the acrylic polyol (A), when based on the mass of resin solid content contained in the base agent, preferably 50% by mass or greater, more preferably 60% by mass or greater, and even more preferably 70% by mass or greater is contained. For the content of the acrylic polyol (A), when based on the mass of resin solid content contained in the entire coating material kit (heat-curable coating composition), preferably 20 to 80% by mass, more preferably 30 to 75% by mass, and even more preferably 40 to 70% by mass is contained.

The above-mentioned acrylic polyol (A) having an alkoxysilyl group, for example, can be manufactured by copolymerizing a hydroxyl group-containing polymerizable unsaturated monomer (a11), an alkoxysilyl group-containing polymerizable unsaturated monomer (a12), and an additional polymerizable unsaturated monomer (a13) that can be copolymerized.

The above-mentioned hydroxyl group-containing polymerizable unsaturated monomer (a11) is a compound having one or more of each of a hydroxyl group and a polymerizable unsaturated group per molecule. In the present specification, a polymerizable unsaturated group means an unsaturated group that can undergo radical polymerization. Examples of the above-mentioned polymerizable unsaturated group include vinyl group and (meth)acryloyl group. The hydroxyl group based on the hydroxyl group-containing polymerizable unsaturated monomer (a11) can function as a crosslinkable functional group of the resulting acrylic polyol (A) having an alkoxysilyl group.

Examples of the above-mentioned hydroxyl group-containing polymerizable unsaturated monomer (a11) can specifically include monoesters of acrylic acid or methacrylic acid with dihydric alcohol having 2 to 10 carbon atoms, for example, 2-hydroxyethyl (meth)acrylate, 2-hydroxylpropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, caprolactone-modified hydroxyl group-containing (meth)acrylate, and 4-methylolcyclohexyl (meth)acrylate. Examples of commercially available products of the above-mentioned caprolactone-modified hydroxyl group-containing (meth)acrylate include "Placcel FM" (trade name, manufactured by Daicel Corporation). Examples of commercially available products of the above-mentioned 4-methylolcyclohexyl acrylate include "CHDMMA" (trade name, manufactured by Nihon Kasei Co., Ltd.). The above-mentioned hydroxyl group-containing polymerizable unsaturated monomers (a11) can be used independently or in combination of two or more.

In the present specification, "(meth)acrylate" means "acrylate and/or methacrylate". "(Meth)acrylic acid" means "acrylic acid and/or methacrylic acid". "(Meth)acryloyl" means "acryloyl and/or methacryloyl". "(Meth)acrylamide" means "acrylamide and/or methacrylamide".

As the above-mentioned hydroxyl group-containing polymerizable unsaturated monomer (a11), from the viewpoint of inhibiting penetration of inks and stains, a polymerizable unsaturated monomer having a hydroxyl group-containing hydrocarbon group of 2 to 20 carbon atoms, specifically, 2-hydroxyethyl (meth)acrylate, 2-hydroxypropyl (meth)acrylate, 4-hydroxybutyl (meth)acrylate, or 4-methylolcyclohexyl acrylate, is particularly preferable.

The above-mentioned alkoxysilyl group-containing polymerizable unsaturated monomer (a12) is a compound having one or more of each of an alkoxysilyl group and a polymerizable unsaturated group per molecule. Specifically, examples can include vinyltrimethoxysilane, vinyltriethoxysilane, acryloylethyltrimethoxysilane, methacryloxyethyltrimethoxysilane, acryloxypropyltrimethoxysilane, methacryloxypropyltrimethoxysilane, acryloxypropyltriethoxysilane, methacryloxypropyltriethoxysilane, and vinyl tris($\beta$-methoxyethoxy)silane. Preferable alkoxysilyl group-containing polymerizable unsaturated monomers include vinyltrimethoxysilane, $\gamma$-acryloxypropyltrimethoxysilane, and $\gamma$-methacryloxypropyltrimethoxysilane. The above-mentioned alkoxysilyl group-containing polymerizable unsaturated monomers (a12) can be used independently or in combination of two or more.

The above-mentioned additional polymerizable unsaturated monomer (a13) that can be copolymerized is a compound having one or more polymerizable unsaturated groups per molecule, other than the above-mentioned hydroxyl group-containing polymerizable unsaturated monomer (a11) and the above-mentioned alkoxysilyl group-containing polymerizable unsaturated monomer (a12). Specific examples thereof are listed in the following (1) to (11).

(1) Aromatic polymerizable unsaturated monomers: for example, styrene, $\alpha$-methylstyrene, and vinyltoluene,

(2) polymerizable unsaturated monomers having a branched structure and having a hydrocarbon group of 8 or more carbon atoms: for example, 2-ethylhexyl (meth)acrylate, isooctyl (meth)acrylate, isomyristyl (meth)acrylate, and isostearyl (meth)acrylate: commercially available products of the above-mentioned isostearyl (meth)acrylate include "Isostearyl Acrylate" (trade name, manufactured by Osaka Organic Chemical Industry Ltd.),

(3) alicyclic hydrocarbon group-containing polymerizable unsaturated monomers having 3 to 20 carbon atoms: for example, bridged alicyclic hydrocarbon group-containing polymerizable unsaturated monomers having 10 to 20 carbon atoms such as isobornyl (meth)acrylate, tricyclodecanyl (meth)acrylate, adamantyl (meth)acrylate, 3,5-dimethyladamantyl (meth)acrylate, and 3-tetracyclododecyl (meth)acrylate; and polymerizable unsaturated monomers having an alicyclic hydrocarbon group of 3 to 12 carbon atoms such as cyclohexyl (meth)acrylate, 4-methylcyclohexylmethyl (meth)acrylate, 4-ethylcyclohexylmethyl (meth)acrylate, 4-methoxycyclohexylmethyl (meth)acrylate, t-butylcyclohexyl (meth)acrylate, cyclooctyl (meth)acrylate, cyclododecyl (meth)acrylate, and tetrahydrofurfuryl (meth)acrylate,

(4) linear or branched alkyl esters of (meth)acrylic acid having 1 to 7 carbon atoms: methyl (meth)acrylate, ethyl (meth)acrylate, propyl (meth)acrylate, isopropyl (meth)acrylate, butyl (meth)acrylate, isobutyl (meth)acrylate, and t-butyl (meth)acrylate,

(5) linear alkyl esters of (meth)acrylic acid having 8 to 22 carbon atoms: for example, lauryl (meth)acrylate and stearyl (meth)acrylate,

(6) epoxy group-containing polymerizable unsaturated monomers: for example, glycidyl (meth)acrylate,

(7) nitrogen-containing polymerizable unsaturated monomers: for example, (meth)acrylamide, N,N-dimethylaminoethyl (meth)acrylate, vinylpyridine, and vinylimidazole,

(8) other vinyl compounds: for example, vinyl acetate, vinyl propionate, vinyl chloride, vinylidene chloride, divinyl ether, and "VeoVa9" and "VeoVa10" (trade names, manufactured by Hexion Inc.), which are vinyl esters of versatic acid,

(9) unsaturated group-containing nitrile compounds: for example, (meth)acrylonitrile,

(10) acidic functional group-containing polymerizable unsaturated monomers: for example, carboxyl group-containing unsaturated monomers such as (meth)acrylic acid, crotonic acid, itaconic acid, maleic acid, and maleic anhydride; sulfonic acid group-containing unsaturated monomers such as vinylsulfonic acid and sulfoethyl (meth)acrylate; and acidic phosphate ester-based unsaturated monomers such as 2-(meth)acryloyloxyethyl acid phosphate, 2-(meth) acryloyloxypropyl acid phosphate, 2-(meth)acryloyloxy-3-chloropropyl acid phosphate, and 2-(meth)acryloyloxyethyl phenyl phosphate, and

(11) polymerizable unsaturated monomers having a polydimethylsiloxane structure: for example, as commercially available products, "Silaplane FM-0721", "Silaplane FM-0711", "Silaplane FM-0725" (the foregoing, trade names, manufactured by JNC Corporation), "X-22-174ASX", "X-22-174BX", "KF-2012", "X-22-2426", "X-22-2404", and "X-22-2475" (the foregoing, trade names, Shin-Etsu Chemical Co., Ltd.) are included.

The above-mentioned additional polymerizable unsaturated monomers (a13) that can be copolymerized can be used independently or in combination of two or more.

It is suitable that the ratio of the above-mentioned hydroxyl group-containing polymerizable unsaturated monomer (a11) used, from the points of stain removal property, abrasion resistance, and water resistance of the resulting coating film, based on the total mass of the copolymerized monomer component constituting the acrylic polyol (A) having an alkoxysilyl group, be 15 to 55% by mass, and preferably 20 to 50% by mass.

It is suitable that the ratio of the above-mentioned alkoxysilyl group-containing polymerizable unsaturated monomer (a12) used, from the points of stain removal property, abrasion resistance, and transparency of the resulting coating film, based on the total mass of the copolymerized monomer component constituting the acrylic polyol (A) having an alkoxysilyl group, be 5 to 60% by mass, and preferably 20 to 50% by mass.

The above-mentioned additional polymerizable unsaturated monomers (a13) are optional components, and thereamong, acidic functional group-containing polymerizable unsaturated monomers such as carboxyl group-containing unsaturated monomers, sulfonate group-containing unsaturated monomers, and acidic phosphate ester-based unsaturated monomers can act as internal catalysts when the obtained acrylic polyol (A) having an alkoxysilyl group crosslinks with a polyisocyanate compound. The amount used, based on the total mass of the copolymerized monomer component constituting the acrylic polyol (A) having an alkoxysilyl group, is preferably within the range of 0 to 5% by mass, and more preferably within the range of 0 to 3% by mass.

The copolymerization method for obtaining the acrylic polyol (A) having an alkoxysilyl group by copolymerizing the above-mentioned monomer mixture is not particularly limited, and any known copolymerization method can be used. A solution polymerization method in which polymerization occurs in an organic solvent in the presence of a polymerization initiator is preferably used.

Examples of the organic solvent used during the above-mentioned solution polymerization can include aromatic solvents such as toluene, xylene, and high-boiling-point aromatic hydrocarbons; ester-based solvents such as ethyl acetate, butyl acetate, 3-methoxybutyl acetate, ethylene glycol ethyl ether acetate, and propylene glycol methyl ether acetate; ketone-based solvents such as methyl ethyl ketone, methyl isobutyl ketone, and methyl amyl ketone; glycol ether-based solvents such as ethylene glycol monomethyl ether, ethylene glycol monoethyl ether, diethylene glycol monomethyl ether, ethylene glycol monobutyl ether, and propylene glycol monomethyl ether; alcohol-based organic solvents such as methanol, ethanol, isopropanol, n-butanol, and isobutanol; propyl propionate, butyl propionate, ethoxyethyl propionate. Examples of commercially available products of the above-mentioned high-boiling-point aromatic hydrocarbon include "Swasol 1000" (trade name, manufactured by Cosmo Oil Co., Ltd., high-boiling-point petroleum-based solvent).

The above-mentioned organic solvents can be used alone or in combination of two or more. When the acrylic polyol (A) having an alkoxysilyl group has a high hydroxyl value, using an ester-based solvent or ketone-based solvent having a high boiling point as the above-mentioned organic solvent is preferable from the point of solubility of the resin. Further, an aromatic solvent having a high boiling point can be used in combination with the ester-based solvent or ketone-based solvent having a high boiling point.

Examples of polymerization initiators that can be used during copolymerization of the above-mentioned acrylic polyol (A) having an alkoxysilyl group include known radical polymerization initiators 2,2'-azobisisobutyronitrile, benzoyl peroxide, 2,2-di(t-amylperoxy)butane, di-t-butyl peroxide, di-t-amyl peroxide, t-butyl peroctoate, and 2,2'-azobis(2-methlbutyronitrile). The above-mentioned acrylic polyol (A) having an alkoxysilyl group may be composed of one copolymer, or may be composed of two or more copolymers.

The hydroxyl value of the above-mentioned acrylic polyol (A) having an alkoxysilyl group, from the viewpoint of stain removal property, is within a range of preferably 120 to 200 mgKOH/g, more preferably 130 to 200 mgKOH/g, and even more preferably 140 to 200 mgKOH/g.

The weight average molecular weight of the above-mentioned acrylic polyol (A) having an alkoxysilyl group, from the viewpoints of stain removal property, abrasion resistance, and transparency, is within a range of preferably 5,000 to 30,000, more preferably 5,000 to 20,000, and even more preferably 6,000 to 15,000.

In the present specification, weight average molecular weight and number average molecular weight are values calculated from a chromatogram measured by gel permeation chromatography, based on the molecular weight of standard polystyrene. For gel permeation chromatography, "HLC8120 GPC" (manufactured by Tosoh Corporation) was used. Four columns, "TSKgel G-4000HXL", "TSKgel G-3000HXL", "TSKgel G-2500HXL", and "TSKgel G-2000HXL" (all trade names, manufactured by Tosoh Corporation), were used, and measurement was carried out under the conditions of mobile phase: tetrahydrofuran, measurement temperature: 40°C, flow rate: 1 mL/min, and detector: RI.

The glass transition temperature of the above-mentioned acrylic polyol (A) having an alkoxysilyl group, from the viewpoints of stain removal property, abrasion resistance, and smoothness, is within a range of preferably -30°C to 50°C, and more preferably -10°C to 40°C.

In the present specification, glass transition temperature Tg is a value calculated according to the formula below.

$$1/Tg\ (K) = W1/T1 + W2/T2 + \ldots Wn/Tn$$

$$Tg\ (°C) = Tg\ (K) - 273$$

wherein W1, W2, ... Wn are each a mass fraction of a monomer, and T1, T2 ... Tn are each a glass transition temperature Tg (K) of the homopolymer of a monomer.

The glass transition temperature of the homopolymer of each monomer is a value according to POLYMER HANDBOOK Fourth Edition, Editors J. Brandrup, E.H. Immergut, E.A. Grulke (1999). Glass transition temperature of a monomer not described in the literature is a value obtained by synthesizing a homopolymer of the monomer so that the weight average molecular weight is 50,000 and measuring the glass transition temperature thereof with a Seiko Instruments DSC220U (differential scanning calorimeter). The measurement was carried out by weighing out a predetermined amount of sample at 50 mg onto a dedicated sample dish, drying at 130°C at 3 hours, then in an inert gas, heating from -50°C to 150°C at a rate of 10°C/min, and reading the temperature at the inflection point of the obtained caloric curve.

[Polyisocyanate compound (B)]

The coating material kit of the present invention comprises, as a curing agent component, a polyisocyanate compound (B).

The polyisocyanate compound (B) in the present invention is a compound having two or more isocyanate groups per molecule. Examples of the above-mentioned polyisocyanate compound (B) include aliphatic polyisocyanates, alicyclic polyisocyanates, aromatic aliphatic polyisocyanates, aromatic polyisocyanates, and derivatives of the polyisocyanates.

Examples of the above-mentioned aliphatic polyisocyanates include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanates such as 2-isocyanatoethyl 2,6-triisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the above-mentioned alicyclic polyisocyanates include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) and mixtures thereof, methylenebis(4,1-cyclohexanediyl)diisocyanate (common name: hydrogenated MDI), and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the above-mentioned aromatic aliphatic polyisocyanates include aromatic aliphatic diisocyanates such as methylenebis(4,1-phenylene)diisocyanate (common name: MDI), 1,3- or 1,4-xylylene diisocyanate and mixtures thereof, ω,ω'-diisocyanato-1,4-diethylbenzene, and 1,3- or 1,4-bis(1-isocyanato-1-methylethyl)benzene (common name: tetramethylxylylene diisocyanate) and mixtures thereof; and aromatic aliphatic triisocyanates such as 1,3,5-triisocyanatomethylbenzene.

Examples of the above-mentioned aromatic polyisocyanates include aromatic diisocyanates such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) and 2,6-tolylene diisocyanate (common name: 2,6-TDI) and mixtures thereof, 4,4'-toluidine diisocyanate, and 4,4'-diphenylether diisocyanate; aromatic triisocyanates such as triphenylmethane-4,4',4"-triisocyanate, 1,3,5-triisocyanatobenzene, and 2,4,6-triisocyanatotoluene; and aromatic tetraisocyanates such as 4,4'-diphenylmethane-2,2',5,5'-tetraisocyanate.

Examples of derivatives of the above-mentioned polyisocyanates include dimers, trimers, biurets, allophanates, uretdiones, uretoimines, isocyanurates, and oxadiazinetriones of the above-mentioned polyisocyanates, polymethylene polyphenyl polyisocyanates (crude MDI and polymeric MDI), and crude TDI. The above-mentioned polyisocyanates and derivatives thereof may be used independently or in combination of two or more.

In the coating material kit of the present invention, the above-mentioned polyisocyanate compound (B) contains an isocyanurate trimer. By containing an isocyanurate trimer in the above-mentioned polyisocyanate compound (B), crosslink density in a coating film formed from the heat-curable coating composition is increased, and thus removability is improved.

As the above-mentioned polyisocyanate compound (B), a blocked polyisocyanate compound in which an isocyanate group in the above-mentioned polyisocyanate compound is blocked may be used. The blocking can be easily carried out by mixing an unblocked polyisocyanate compound with a blocking agent. As the above-mentioned blocking agent, for example, phenol compounds; lactam compounds; alcohol compounds; oxime compounds; mercaptan compounds; and active methylene compounds such as dimethyl malonate and diethyl malonate can be used. The above-mentioned polyisocyanate compounds can be used independently or in combination of two of more. An unblocked polyisocyanate compound and a blocked polyisocyanate compound can be used in combination.

The coating material kit of the present invention comprises the above-mentioned polyisocyanate compound (B) in a content such that the equivalent ratio (NCO/OH) of the isocyanate group of the polyisocyanate compound (B) in the above-mentioned curing agent to the hydroxyl group of the hydroxyl group-containing resin in the above-mentioned base agent falls within a range of preferably 0.5 to 2.0, and more preferably 0.6 to 1.2, from the viewpoints of stain removal property, abrasion resistance, and curability of the resulting coating film.

The coating material kit of the present invention comprises the above-mentioned polyisocyanate compound (B) in a content such that the solid content of the polyisocyanate compound (B) based on the mass of the resin solid content in the heat-curable coating composition falls within a range of preferably 0.1 to 50% by mass, more preferably 5 to 45% by mass, and even more preferably 10 to 40% by mass, from the viewpoints of stain removal property, abrasion resistance, and curability of the resulting coating film.

[Catalyst compound (C)]

The coating material kit of the present invention, from the point of low-temperature curability, preferably comprises at least one catalyst compound (C) selected from amidine compounds, guanidine compounds, phosphazene compounds, and imidazole compounds. For the low-temperature curing, for example, the heat-curable coating composition is heat-cured at 80°C for 30 minutes.

The above-mentioned amidine compounds include 1,5-diazabicyclo[4,3,0]-nonene-5 (DBN) and derivatives thereof, 1,5-diazabicyclo[4,4,0]-decene-5 and derivatives thereof, 1,8-diazabicyclo[5,4,0]-undecene-7 (DBU) and derivatives thereof, 5-hydroxypropyl-1,8-diazabicyclo[5,4,0]-undecene-7 and derivatives thereof, and 5-dibutylamino-1,8-diazabicyclo[5,4,0]-undecene-7 and derivatives thereof.

The above-mentioned guanidine compounds include 1-phenylguanidine, 1,3-diphenylguanidine, 1,3-dimethylguanidine, and 1,1,3,3-tetramethylguanidine (TMG).

The above-mentioned phosphazene compounds include tert-butylimino-tris(dimethylamino)phosphorane and derivatives thereof, tert-butylimino-tri(pyrrolidino)phosphorane and derivatives thereof, and 1-tert-octyl-4,4,4-tris(dimethylamino)-2,2-bis[tris(dimethylamino)phosphoranylidenamino]-$2\lambda5,4\lambda5$-catenadi(phosphazene) and derivatives thereof.

The above-mentioned imidazole compounds include 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 1-cyanoethyl-2-ethyl-4-methylimidazole, and 1-cyanoethyl-2-phenylimidazole.

The above-mentioned catalyst compounds (C) can be used independently or in combination of two of more. The catalyst compound (C) preferably contains an amidine compound, and more preferably contains 1,8-diazabicyclo[5,4,0]-undecene-7 (DBU) and/or a derivative thereof.

The above-mentioned catalyst compound (C), based on the mass of resin solid content contained in the base agent, is contained within a range of preferably 0.01 to 10% by mass, more preferably 0.1 to 8% by mass, and even more preferably 0.2 to 6% by mass.

[Silicone (D) modified with hydroxyl group-containing resin]

The coating material kit of the present invention preferably comprises a silicone (D) modified with a hydroxyl group-containing resin. A coating film obtained from a heat-curable coating composition containing the silicone (D) modified with a hydroxyl group-containing resin repels ink and graffiti is less likely to be affixed, i.e., repellency is improved.

When the coating material kit of the present invention comprises the silicone (D) modified with a hydroxyl group-containing resin, the silicone (D), based on the mass of resin solid content contained in the base agent, is contained within a range of preferably 0.01 to 20% by mass, more preferably 0.1 to 15% by mass, and even more preferably 1 to 10% by mass.

The hydroxyl value of the above-mentioned silicone (D) modified with a hydroxyl group-containing resin is preferably 10 to 200 mgKOH/g, and more preferably 20 to 150 mgKOH/g.

The number average molecular weight of the above-mentioned silicone (D) modified with a hydroxyl group-containing resin is within the range of preferably 1000 to 100000, and more preferably 3000 to 50000.

Commercially available products of the above-mentioned silicone (D) modified with a hydroxyl group-containing resin include "X-22-4952" and "KF-6123" (trade names, manufactured by Shin-Etsu Chemical Co., Ltd.) comprising a polyether structure in the polymer structure; "BYK-370", "BYK-375", "BYK-377", and "BYK-SILCLEAN 3720" (trade names, manufactured by BYK-Chemie Japan) comprising a polyester structure in the polymer structure; and "BYK-SILCLEAN 3700" (trade name, manufactured by BYK-Chemie Japan), "ZX-028-G" (trade name, manufactured by T&K TOKA Corporation), and "Cymac US-270" (trade name, manufactured by Toagosei Co., Ltd.) comprising an acrylic structure in the polymer structure.

[Organic solvent-dispersed type colloidal silica (E)]

The coating material kit of the present invention preferably comprises an organic solvent-dispersed type colloidal silica (E). By containing an organic solvent-dispersed type colloidal silica (E) in the heat-curable coating composition, the coating film forms a phase having a high crosslink density in the surface layer, and stain resistance against staining liquids and abrasion resistance are improved.

The above-mentioned organic solvent-dispersed type colloidal silica (E) consists of stably dispersed silica particles having a particle size of about 5 to 120 nm in an organic solvent such as an alcohol, a glycol, or an ether. Commercially available products of the above-mentioned organic solvent-dispersed type colloidal silica (E) can include "Snowtex MPA-ST", "Snowtex IPA-ST", "Snowtex IPA-ST-UP", "Snowtex IPA-ST-ZL", "Snowtex EG-ST", "Snowtex NPC-ST-30", "Snowtex DMAC-ST", "Snowtex MEK-ST", "Snowtex MEK-ST-UP", "Snowtex MEK-ST-L", "Snowtex MIBK-ST", "Snowtex XBA-ST", "Snowtex PMA-ST", "Snowtex PGM-ST" (the foregoing, trade names, manufactured by Nissan Chemical Corporation), "NANOBYK-3650", "NANOBYK-3651", "NANOBYK-3652" (the foregoing, trade names, manufactured by BYK-Chemie Japan), and the "OSCAL" series (trade name, manufactured by JGC Catalysts and Chemicals Ltd.).

For stability in the coating material kit, the above-mentioned organic solvent-dispersed type colloidal silica (E) is preferably modified on the silica surface with a resin. Such a modification method includes a method of reacting the organic solvent-dispersed type colloidal silica (E) with 3-methacryloyloxypropyltrimethoxysilane, 3-acryloyloxypropyltrimethoxysilane, 2-acryloyloxyethyl isocyanate, 2-methacryloyloxyethyl isocyanate, or 1,1-bis(acryloyloxymethyl)ethyl isocyanate. The acrylic resin-coated colloidal silica having a polysiloxane structure as described in WO 2021/131444 is particularly preferable. The above-mentioned organic solvent-dispersed type colloidal silica (E) may be used independently, or may be used in combination of two or more.

The average primary particle size of the above-mentioned organic solvent-dispersed type colloidal silica (E) is preferably 5 to 100 nm, and more preferably 5 to 50 nm. As a result, when the present dispersion is mixed with another organic material and used, mechanical characteristics improvement effect and transparency are more likely to be exhibited.

In the present specification, "average primary particle size" means median diameter (d50) in a volumetric particle size distribution. The volumetric particle size distribution is measured by a laser diffraction/scattering method. In the present invention, the volumetric particle size distribution of the present dispersion is measured using the laser diffraction/scattering particle size distribution analyzer "Microtrac NT3300" (trade name, manufactured by Nikkiso Co., Ltd.). In that case, the sample concentration is adjusted so as to fall within a predetermined transmittance range set in the apparatus.

When the coating material kit of the present invention comprises the above-mentioned organic solvent-dispersed type colloidal silica (E), the above-mentioned organic solvent-dispersed type colloidal silica (E), based on the mass of resin solid content contained in the base agent, are contained in the heat-curable coating composition within a range of preferably 0.1 to 50% by mass, more preferably 0.5 to 40% by mass, and even more preferably 1 to 30% by mass.

[Heat-curable coating composition]

The coating material kit of the present invention is a multi-liquid coating composition comprising a base agent and a curing agent. In the coating material kit, the base agent and the curing agent are separated, and a heat-curable coating composition is obtained by mixing the base agent and the curing agent. The base agent contains the acrylic polyol (A) having an alkoxysilyl group described above. The curing agent contains the polyisocyanate compound (B) described above.

The heat-curable coating composition contains an acrylic polyol (A) having an alkoxysilyl group derived from the base agent and a polyisocyanate compound (B) derived from the curing agent.

At least one of the base agent and/or the curing agent can further comprise an organic solvent.

Examples of the above-mentioned organic solvent include ketones such as acetone, methyl ethyl ketone, and methyl isobutyl ketone; esters such as ethyl acetate, butyl acetate, methyl benzoate, ethyl ethoxypropionate, ethyl propionate, and methyl propionate; ethers such as tetrahydrofuran, dioxane, and dimethoxyethane; glycol ethers such as ethylene glycol monomethyl ether, ethylene glycol monoethyl ether, diethylene glycol monomethyl ether, propylene glycol monomethyl ether acetate, and 3-methoxybutyl acetate; aromatic hydrocarbons, and aliphatic hydrocarbons, which may be used independently, or may be used in combination of two or more. When an organic solvent is used in both of the base agent and the curing agent, the organic solvent in the base agent and the organic solvent in the curing agent may be the same organic solvent, or may be different organic solvents. The above-mentioned organic solvents can be appropriately used in combination depending on the purpose, such as adjustment of viscosity or adjustment of coatability.

When the coating material kit of the present invention comprises the catalyst compound (C) described above, the catalyst compound (C) described above may be contained in one of the base agent and the curing agent, may be contained in both of the base agent and the curing agent, or may be contained in a third component that is different from the base agent and the curing agent, but from the viewpoints of storage stability and workability, may be contained in a third component that is different from the base agent and the curing agent.

When the coating material kit of the present invention comprises the silicone (D) modified with a hydroxyl group-containing resin described above, the silicone (D) modified with a hydroxyl group-containing resin, from the viewpoint of storage stability, is preferably contained in the base agent or a third component that is different from the base agent and the curing agent, and from the viewpoint of workability, is more preferably contained in the base agent.

When the coating material kit of the present invention comprises the organic solvent-dispersed type colloidal silica (E), the organic solvent-dispersed type colloidal silica (E), from the viewpoint of storage stability, is preferably contained in the base agent or a third component that is different from the base agent and the curing agent, and from the viewpoint of workability, is more preferably contained in the base agent.

The coating material kit (base agent and/or curing agent) of the present invention can further comprise ordinary additives for coating materials such as resins other than the acrylic polyol (A) having an alkoxysilyl group, pigments, ultraviolet absorbers (for example, benzotriazole-based absorbers, triazine-based absorbers, salicylic acid derivative-based absorbers, or benzophenone-based absorbers), photostabilizers (for example, hindered piperidines), dehydrating agents, thickeners, defoamers, plasticizers, surface modifiers, and antisettling agents, each independently or in combination of two or more.

Examples of resins other than the acrylic polyol (A) having an alkoxysilyl group include acrylic resins (excluding those comprising an alkoxysilyl group and a hydroxyl group), polyester resins, alkyd resins, urethane resins, fluororesins, epoxy resins, silicone resins, polyether resins, acrylic silicone resins, and vinyl acetate/VeoVa resins.

When the coating material kit (base agent and/or curing agent) of the present invention contains the above-mentioned ultraviolet absorber, the blending amount of the above-mentioned ultraviolet absorber, based on 100 parts by mass of total resin solid content in the heat-curable coating composition, is in an amount so as to fall within a range of preferably 0.1 to 10 parts by mass, more preferably 0.2 to 5 parts by mass, and even more preferably 0.3 to 2 parts by mass.

When the coating material kit of the present invention contains the above-mentioned photostabilizer, the blending amount of the above-mentioned photostabilizer, based on 100 parts by mass of total resin solid content in the heat-curable coating composition, is in an amount so as to fall within a range of preferably 0.1 to 10 parts by mass, more preferably 0.2 to 5 parts by mass, and even more preferably 0.3 to 2 parts by mass.

Examples of the above-mentioned dehydrating agent can include metal alkoxides such as aluminum isopropylate, aluminum sec-butylate, tetraisopropyl titanate, tetra-n-butyl titanate, zirconium n-butylate, ethyl silicate, and vinyltrimethoxysilane; organoalkoxy compounds such as trimethyl orthoformate, triethyl orthoformate, trimethyl orthoacetate, triethyl orthoacetate, triisopropyl orthoacetate, and dimethoxypropane; and monofunctional isocyanates such as "Additive TI" (trade name, manufactured by Sumika Bayer Urethane Co., Ltd.). These can be used independently or in combination of two or more.

When the coating material kit (base agent and/or curing agent) of the present invention contains the above-mentioned dehydrating agent, the blending amount of the above-mentioned dehydrating agent, based on 100 parts by mass of total resin solid content in the heat-curable coating composition, is in an amount so as to fall within a range of preferably 0.01 to 15 parts by mass, and more preferably 0.1 to 8 parts by mass.

The solid contents of the coating material kit of the present invention and the heat-curable coating composition obtained from the above-mentioned coating material kit are not particularly limited. For example, it is preferable that the above-mentioned coating material kit and heat-curable coating composition, from the points of smoothness of the cured coating film and shortening of drying time, have the solid contents thereof appropriately adjusted using a solvent such as the above-mentioned organic solvent, so that the viscosity of the heat-curable coating composition through a Ford Cup No. 4 at 20°C falls within the range of 15 to 60 seconds.

Solid content in the present specification means residual material after removing a volatile component, and the residual material may be in a solid state or a liquid state at room temperature. The mass of the solid content can be calculated by multiplying solid content ratio by the mass of a sample before drying, where the solid content ratio is defined as a ratio of the mass of residual material after drying to the mass before drying.

In the coating material kit of the present invention, the minimum value $E'_{min}$ of storage modulus in the range of 40 to 200°C of a coating film formed by coating an object to be coated with the heat-curable coating composition, then heat-curing at 80°C for 30 minutes and leaving to stand for 1 hour, is a $2.6 \times 10^7$ Pa or more. When the minimum value $E'_{min}$ of storage modulus of a coating film prepared under these conditions is $2.6 \times 10^7$ Pa or more, the coating film has high crosslink density even when cured at a low temperature, and thus inks used for graffiti do not easily penetrate, resulting in a coating film having high removability. The minimum value $E'_{min}$ of storage modulus of the coating film is preferably $3.6 \times 10^7$ Pa or more, and particularly preferably $4.6 \times 10^7$ Pa or more. From the viewpoint of crack resistance of the coating film, in the coating material kit of the present invention, the minimum value $E'_{min}$ of storage modulus in the range of 40 to 200°C of a coating film formed by coating an object to be coated with the heat-curable coating composition, then heat-curing at 80°C for 30 minutes and leaving to stand for 1 hour, is preferably $1.0 \times 10^9$ Pa or less.

In the present specification, the production method for a coating film used in the measurement of storage modulus is as follows.

1. A heat-curable coating composition obtained from the coating material kit is applied onto a polypropylene panel, which is the object to be coated, so that the cured film thickness is 40 μm, dried at 80°C for 30 minutes, and left to stand for 1 hour to form a cured coating film.

2. The cured coating film is cut into strip form having a length of 20 mm and a width of 5 mm, and a free coating film in strip form obtained by peeling the coating film from the polypropylene panel is used as a sample.

In the present specification, storage modulus was measured using the FT-rheology spectrum "Rheogel E-400" (manufactured by UBM). For the free coating film prepared by the above-mentioned production method, by carrying out dynamic viscoelasticity measurement under the conditions of frequency of 11 Hz, heating rate of 4°C/min, and temperature range of room temperature to 200°C, a minimum value $E'_{min}$ of storage modulus in the range of 40 to 200°C is obtained. By leaving the coating film to stand for a predetermined period of time, such as 1 hour, the crosslinking reaction is completed to a certain extent, and thus further crosslinking reaction is not likely to occur even when measurement is carried out under high-temperature conditions.

[Coating film forming method using heat-curable coating composition]

A coating film forming method using a heat-curable coating composition obtained from the coating material kit of the present invention comprises the following steps.

·A coating film forming step of coating an object to be coated with the above-mentioned heat-curable coating composition to form a wet coating film
·A step of heat-curing the above-mentioned wet coating film at a temperature range of 50°C or higher and 120°C or lower

The object to be coated that is coated with the above-mentioned heat-curable coating composition is not particularly limited. Examples of members constituting the above-mentioned object to be coated can include metal substrates such as steel panels, such as cold-rolled steel panels, zinc-plated steel panels, zinc alloy-plated steel panels, stainless steel panels, and tin-plated steel panels, aluminum panels, and aluminum alloy panels; and various plastic materials. The member constituting the above-mentioned object to be coated (particularly, in the case of a car body) may be subjected to a surface treatment such as phosphate treatment, chromate treatment, or composite oxide treatment on the metal surface of the above-mentioned metal substrate. Further, the member constituting the above-mentioned object to be coated (particularly, in the case of a car body) may have an undercoat coating film of various electrodeposition coating material formed, may have the undercoat coating film and an intermediate coating film formed, may have an undercoat coating film, an intermediate coating film, and a base coat coating film formed, or may have an undercoat coating film, an intermediate coating film, a base coat coating film, and a clear coat coating film formed, on the above-mentioned metal substrate.

Specific examples of the above-mentioned object to be coated can include those comprising the above-mentioned members, for example, car bodies (for example, automobiles, trucks, motorcycles, buses, railway vehicles, and two-wheeled vehicles), industrial machinery, construction machinery, ship bodies, building materials, residential facility equipment, and a component of the aforementioned. The above-mentioned heat-curable coating composition, even when cured at a low temperature, has sufficient removability, and thus can be used even when the above-mentioned object to be coated is, for example, a railway vehicle, a building material, or residential facility equipment. By coating an object to be coated with the heat-curable coating composition, a coated article on which a coating film is formed is obtained.

The coating method for the above-mentioned heat-curable coating composition is not particularly limited and, for example, includes coating methods such as air spray coating, airless spray coating, rotary atomization coating, and curtain coating. A wet coating film can be formed by the above-mentioned coating method. In the above-mentioned coating method, static electricity may be applied, as needed. Among these methods, air spray coating, airless spray coating, or rotary atomization coating is particularly preferable. The application amount of the above-mentioned heat-curable coating composition, generally, is preferably in an amount so as to obtain a cured film thickness of 10 to 100 $\mu$m.

The curing of a wet coating film obtained by coating the above-mentioned object to be coated with the above-mentioned heat-curable coating composition is carried out by heating the wet coating film. The heating of the wet coating film can be carried out by any known heating means. For example, a drying furnace such as hot-air furnace, electric furnace, or infrared induction heating furnace can be used. The heating temperature is not particularly limited, and from the viewpoints of production efficiency and energy saving, heating at 50°C or higher and 120°C or lower is preferable, heating at 50°C or higher and 100°C or lower is more preferable, and heating at a low temperature of 50°C or higher and 80°C or lower is even more preferable. The heating time is not particularly limited, and from the viewpoints of production efficiency and energy saving, is within a range of preferably 10 to 60 minutes, and more preferably 15 to 30 minutes.

The coating film after heat curing may be additionally cured at room temperature or heat-cured (post-cured), as needed. If a post-cure is carried out, drying at room temperature for 1 day or more or at 30 to 50°C for 30 minutes or more is preferable, but from the viewpoints of production efficiency and energy saving, not carrying out a post-cure is more preferable. The heat-curable coating composition of the present invention has sufficient removability even without carrying out a post-cure. The heat-curable coating composition of the present invention can be used as a topcoat top clear coat coating composition.

EXAMPLES

Hereinafter, the present invention will be further specifically described with reference to the Manufacturing Examples, Examples, and Comparative Examples. However, the present invention is not limited to the examples. In each example, "part" and "%", unless specified otherwise, are based on mass. The thickness of a coating film is based on a cured coating film.

[Manufacturing Example 1 (manufacture of alkoxysilyl group-containing acrylic polyol)]

30 parts of "Swasol 1000" (trade name, manufactured by Cosmo Oil Co., Ltd., aromatic organic solvent) and 10 parts of n-butanol were charged into a reaction vessel comprising a thermometer, a thermostat, a stirring device, a reflux condenser, a nitrogen inlet tube, and a dropping device. The charged liquid was stirred at 125°C while nitrogen gas was blown into the reaction vessel, and a monomer mixture composed of 30 parts of $\gamma$-methacryloyloxypropyltrimethoxysilane, 35 parts of 2-hydroxypropyl acrylate, 20 parts of styrene, 15 parts of isobutyl methacrylate, and 3 parts of 2,2'-azobis(2-methylbutyronitrile) (polymerization initiator) was dropped into the charged liquid at a uniform rate over a period of 4 hours. The charged liquid was then aged at 125°C for 30 minutes, and a solution composed of 0.5 parts of 2,2'-azobis(2-methylbutyronitrile) and 5.0 parts of "Swasol 1000" was dropped into the charged liquid at a uniform rate over a period of 1 hour. After the charged solution was aged at 125°C for 1 hour, the charged liquid was cooled and diluted by further adding isobutyl acetate into the charged liquid to obtain an alkoxysilyl group-containing acrylic polyol (A-1) solution having a solid content concentration of 60% by mass. The alkoxysilyl group content of the obtained alkoxysilyl group-containing acrylic polyol (A-1) was 1.2 mmol/g, the hydroxyl value was 151 mgKOH/g, the weight average molecular weight was 7,000, and the glass transition temperature was 16.6°C.

[Manufacturing Example 2 (manufacture of alkoxysilyl-free acrylic polyol)]

30 parts of "Swasol 1000" (trade name, manufactured by Cosmo Oil Co., Ltd., aromatic organic solvent) and 10 parts of n-butanol were charged into a reaction vessel comprising a thermometer, a thermostat, a stirring device, a reflux condenser, a nitrogen inlet tube, and a dropping device. The charged liquid was stirred at 125°C while nitrogen gas was blown into the reaction vessel, and a monomer mixture composed of 35 parts of 2-hydroxypropyl acrylate, 20 parts of styrene, 45 parts of isobutyl methacrylate, and 3 parts of 2,2'-azobis(2-methylbutyronitrile) (polymerization initiator) was dropped into the charged liquid at a uniform rate over a period of 4 hours. The charged liquid was then aged at 125°C for 30 minutes, and a solution composed of 0.5 parts of 2,2'-azobis(2-methylbutyronitrile) and 5.0 parts of "Swasol 1000" was dropped into the charged liquid at a uniform rate over a period of 1 hour. After the charged liquid was aged at 125°C for 1 hour, the charged liquid was cooled and diluted by further adding isobutyl acetate into the charged liquid to obtain an acrylic polyol (A-2) solution having a solid content concentration of 60% by mass. The hydroxyl value of the obtained hydroxyl group-containing acrylic resin (A-2) was 151 mgKOH/g, the weight average molecular weight was 7,000, and the glass transition temperature was 36.4°C.

[Manufacturing Example 3 (manufacture of acrylic resin-coated colloidal silica)]

333 parts (100 parts of solid content) of "PGM-ST" (trade name, Nissan Chemical Corporation, silica average primary average size: 15 nm, silica concentration: 30% by mass, dispersion medium: propylene glycol monomethyl ether) and 10 parts of deionized water were loaded into a separable flask equipped with a reflux condenser, a thermometer, and a stirrer. 10 parts of "KBM-503" (trade name, Shin-Etsu Chemical Co., Ltd., γ-methacryloyloxypropyltrimethoxysilane) was then added, and the charged liquid was subjected to a dehydration condensation reaction while stirring at 80°C for 2 hours. 0.03 parts of tetra-n-butylammonium fluoride was added to the charged liquid and allowed to react further for 1 hour while stirring. After the reaction was completed, 30 parts of propylene glycol monomethyl ether was added to the charged liquid, and then volatile components were distilled from the charged liquid in a reduced-pressure state to obtain a polymerizable unsaturated group-containing colloidal silica dispersion liquid having a solid content of 40% of surface-modified silica particles.

104.5 parts of propylene glycol monomethyl ether and 8.5 parts of trimethyl orthoacetate were charged into a separable flask equipped with a reflux condenser, a thermometer, a stirrer, and a nitrogen gas inlet port, and the charged liquid was heated up to 100°C under a nitrogen gas flow. After the charged liquid reached 100°C, a monomer mixture composed of 375 parts (150 parts of solid content) of the above-mentioned polymerizable unsaturated group-containing colloidal silica dispersion liquid, 1 part of "X-22-174ASX" (trade name, Shin-Etsu Silicone Co., Ltd.), 30 parts of γ-methacryloyloxypropyltrimethoxysilane, 35 parts of 2-hydroxypropyl acrylate, 20 parts of styrene, 14 parts of isobutyl methacrylate, 3 parts of 2,2'-azobis(2-methylbutyronitrile) (polymerization initiator), and 23.5 parts of trimethyl orthoacetate was dropped into the charged liquid over a period of 2 hours. The charged liquid was then aged at 100°C for 1 hour, a mixed solution of 1 part of 2,2'-azobis(2-methylbutyronitrile) (polymerization initiator) and 19.5 parts of propylene glycol monomethyl ether was added to the charged liquid, and the charged liquid was further aged for 2 hours. The polymerization rate determined from nonvolatile components was 99%. Propylene glycol monomethyl ether was then added to the charged liquid, and the solvent was replaced through azeotropic distillation in a reduced-pressure state to obtain an acrylic resin-coated colloidal silica dispersion (E-1) having a measured nonvolatile content of 40%.

[Example 1]

100 parts (60 parts of solid content) of an alkoxysilyl group-containing acrylic polyol (A-1) obtained in Manufacturing Example 1, 4.0 parts (1.0 part of solid content) of "BYK-SILCLEAN 3700" (trade name, manufactured in BYK-Chemie Japan, silicone (D) modified with a hydroxyl group-containing resin, 25% active component), 25 parts (10 parts of solid content) of an acrylic resin-coated colloidal silica dispersion (E-1) obtained in Manufacturing Example 3, 5.0 parts of trimethyl orthoacetate (dehydrating agent), and 32 parts of butyl acetate (organic solvent) were blended, and stirred until uniform to produce a base agent.

In a separate vessel, 35.5 parts of a polyisocyanate compound (B), "Sumijour N3300" (trade name, manufactured by Sumika Covestro Urethane Co., Ltd., isocyanurate ring adduct of hexamethylene diisocyanate, solid content ratio of 100%), and 17.5 parts of diethylene glycol monoethyl ether acetate were blended, and mixed until uniform to produce a curing agent.

166 parts of the base agent, 53 parts of the curing agent, and 1.5 parts of a catalyst (C), "U-CAT SA102" (trade name, manufactured by San-Apro Ltd., curing catalyst, DBU-octylate, 100% active component), were mixed, and butyl acetate was added under stirring so as to obtain a coating material solid content of 40% to obtain a heat-curable coating composition (X-1).

[Examples 2 to 12 and Comparative Examples 1 to 4]

Except for blending as indicated in Table 1 and Table 2, heat-curable coating compositions (X-2) to (X-16) were obtained in the same manner as in Example 1.

[Table 1]

[Table 1]

Table 1

| | | Example | Example 1 | Example 2 | Example 3 | Example 4 | Example 5 | Example 6 | Example 7 | Example 8 |
|---|---|---|---|---|---|---|---|---|---|---|
| | | Heat-curable coating composition | X-1 | X-2 | X-3 | X-4 | X-5 | X-6 | X-7 | X-8 |
| Base agent | Alkoxysilyl group-containing acrylic polyol (A) | A-1 | 100 | 100 | 100 | 100 | 100 | 100 | 100 | 100 |
| | Alkoxvsilvl-free acrylic polyol | A-2 | | | | | | | | |
| | Silicone (D) modified with | SILCLEAN 3700 | I 4 | | | 4 | 4 | | 4 | 4 |
| | Hydroxyl group-containing resin | SILCLEAN 3720 | | 4 | | | | | | |
| | Organic solvent-dispersed type | E-1 | 25 | 25 | 25 | | | | 25 | |
| | colloidal silica (E) | NANOBYK-3652 (note 1) | | | | | 22 | | | |
| | Organic solvent | Butyl acetate | 32 | 32 | 32 | 32 | 32 | 32 | 32 | 32 |
| | Dehydrating agent | Trimethyl orthoacetate | 5 | 5 | 5 | 5 | 5 | 5 | 5 | 5 |
| Curing agent | Polyisocyanate compound (B) | N3300 | 35.5 | 35.5 | 35.5 | 35.5 | 35.5 | 35.5 | 35.5 | 35.5 |
| | Organic solvent | Diethylene glycol monoethyl ether acetate | 17.5 | 17.5 | 17.5 | 17.5 | 17.5 | 17.5 | 17.5 | 17.5 |

| | | Example | Example 1 | Example 2 | Example 3 | Example 4 | Example 5 | Example 6 | Example 7 | Example 8 |
|---|---|---|---|---|---|---|---|---|---|---|
| | | Heat-curable coating composition | X-1 | X-2 | X-3 | X-4 | X-5 | X-6 | X-7 | X-8 |
| Catalyst (C) | Amidine compound | SA-102 | 1.5 | 1.5 | 1.5 | 1.5 | 1.5 | 1.5 | 0.75 | 0.75 |
| | Guanidine compound | 1-phenylguanidine | | | | | | | | |
| | Imidazole compound | 2-methylimidazole | | | | | | | | |
| | Phosphate ester compound | N4167 (note 2) | | | | | | | | |
| | Aluminum chelate compound | CAT-AC (note 3) | | | | | | | | |
| | | E'$_{min}$ [$10^7$ Pa] of coating film heat-cured at 80°C for 30 min | 7.4 | 7.2 | 5.1 | 4.9 | 7.1 | 4.3 | 4.6 | 2.6 |
| Evaluation | Removability (marker) | edding 850 | B | B | B | B | B | B | B | B |
| | | edding 750 | A | A | A | A | A | A | A | B |
| | | Camlin blue | B | B | B | B | B | B | B | B |
| | | Camlin red | A | A | A | A | A | A | A | B |
| | | Magic Ink red | A | A | A | A | A | A | A | B |
| | | Magic Ink black | A | A | A | A | A | A | A | B |
| | Removability (other than marker) | Simulated staining liquid | A | | | | | | | |
| | | Curry | B | | | | | | | |
| | | Coffee | A | | | | | | | |
| | | Repellency | A | A | C | A | A | C | A | A |

[Table 2]

| Table 2 | | | Example 9 | Example 10 | Example 11 | Example 12 | Comparative Example 1 | Comparative Example 2 | Comparative Example 3 | Comparative Example 4 |
|---|---|---|---|---|---|---|---|---|---|---|
| | | Example | | | | | | | | |
| | | Heat-curable coating composition | X-9 | X-10 | X-11 | X-12 | X-13 | X-14 | X-15 | X-16 |
| Base agent | Alkoxysilyl group-containing acrylic polyol (A) | A-1 | 100 | 100 | 100 | 100 | 100 | 100 | 100 | |
| | Alkoxvsilvl-free acrylic polyol | A-2 | | | | | | | | 100 |
| | Silicone (D) modified with | SILCLEAN 3700 | 4 | 4 | 4 | 4 | | | | |
| | Hydroxyl group-containing resin | SILCLEAN 3720 | | | | | | | | |
| | Organic solvent-dispersed type | E-1 | 25 | 25 | 25 | 25 | 23 | | 23 | 25 |
| | colloidal silica (E) | NANOBYK-3652 (note 1) | | | | | | | | |
| | Organic solvent | Butyl acetate | 32 | 32 | 32 | 32 | 32 | 32 | 32 | 32 |
| | Dehydrating agent | Trimethyl orthoacetate | 5 | 5 | 5 | 5 | 5 | 5 | 5 | 5 |
| Curing agent | Polvisocvanate compound (B) | N3300 | 28.5 | 42.5 | 35.5 | 35.5 | 35.5 | 35.5 | 35.5 | 35.5 |
| | Organic solvent | Diethylene glycol monoethyl ester acetate | 17.5 | 17.5 | 17.5 | 17.5 | 17.5 | 17.5 | 17.5 | 17.5 |

EP 4 711 429 A1

16

| Table 2 | | | Example 9 | Example 10 | Example 11 | Example 12 | Comparative Example 1 | Comparative Example 2 | Comparative Example 3 | Comparative Example 4 |
|---|---|---|---|---|---|---|---|---|---|---|
| | | Example | | | | | | | | |
| | | Heat-curable coating composition | X-9 | X-10 | X-11 | X-12 | X-13 | X-14 | X-15 | X-16 |
| Catalyst (C) | Amidine compound | SA-102 | 1.5 | 1.5 | | | | | | |
| | Guanidine compound | 1-phenylguanidine | | | 1.5 | | | | | |
| | Imidazole compound | 2-methylimidazole | | | | 1.5 | | | | |
| | Phosphate ester compound | N4167 (note 2) | | | | | 2 | 2 | 2 | 2 |
| | Aluminum chelate compound | CAT-AC (note 3) | | | | | | | 1 | |
| E'$_{min}$ [$10^7$ Pa] of coating film heat-cured at 80°C for 30 min | | | 7.1 | 7.5 | 6.4 | 6.3 | 1.9 | 2.1 | 1.4 | 0.62 |
| Evaluation | Removability (marker) | edding 850 | B | B | B | B | C | C | C | C |
| | | edding 750 | A | A | A | A | B | B | B | C |
| | | Camlin blue | B | B | B | B | C | C | C | C |
| | | Camlin red | A | A | A | A | B | B | B | C |
| | | Magic Ink red | A | A | A | A | B | B | B | C |
| | | Magic Ink black | A | A | A | A | B | B | B | C |
| | Removability (other than marker) | Simulated staining liquid | | | | | | | | C |
| | | Curry | | | | | | | | C |
| | | Coffee | | | | | | | | C |
| | Repellency | | A | A | A | A | A | C | A | B |

The (note 1) to (note 3) in Table 1 and Table 2 are as follows.

(Note 1) "NANOBYK-3652": trade name, manufactured by BYK-Chemie Japan, organic solvent-dispersed type colloidal silica, solid content ratio of 31%, silica content ratio of 25%

(Note 2) "NACURE 4167": trade name, manufactured by King Industries, Inc., triethylamine salt of alkyl phosphate, curing catalyst, 25% active component

(Note 3) "CAT-AC": trade name, manufactured by Shin-Etsu Silicone Co., Ltd., aluminum chelate, curing catalyst, 50% active component

[Measurement of storage modulus]

Storage modulus was measured in accordance with the method described in the present specification.

[Production of test panel for evaluation test]

The viscosity of each of the above-mentioned heat-curable coating compositions (X-1) to (X-16) was adjusted to a viscosity of 25 seconds at 20°C using a Ford Cup No. 4 by adding butyl acetate. Then, a test panel was produced for each in the following manner. Each of the above-mentioned heat-curable coating compositions (X-1) to (X-16), after the mixing of the base agent, curing agent, and catalyst (C), were coated onto the base coat described below within 10 minutes.

On a 0.8 mm thick dull steel panel subjected to a zinc phosphate conversion treatment, electrodeposition coating was carried out with "Elecron GT-10" (trade name, Kansai Paint Co., Ltd., thermosetting epoxy resin-based cationic electrodeposition coating material) so as to obtain a film thickness of 20 μm to form an uncured electrodeposition coating film, and the uncured electrodeposition coating film was heated at 170°C for 30 minutes to be cured, thereby forming an electrodeposition coating film. The above-mentioned electrodeposition coating film was coated with an aqueous base coat "WBC713T" (trade name, manufactured by Kansai Paint Co., Ltd., acrylic-melamine resin-based automobile topcoat base coat coating material, white coating color) so as to obtain a dry film thickness of 15 μm to form an uncured base coat coating film, the uncured base coat coating film was left to stand at room temperature for 5 minutes, preheated at 80°C for 10 minutes, and then heat-cured at 140°C for 30 minutes, thereby forming a cured base coat coating film. Then, each of the heat-curable coating compositions that were manufactured and viscosity-adjusted in the above-mentioned Examples and Comparative Examples was applied onto the cured base coat coating film so as to obtain a film thickness of 35 μm to form an uncured coating film, the uncured coating film was left to stand at room temperature for 10 minutes, then heat-cured at 80°C for 30 minutes, and left to stand for 1 hour to form a coating film, whereby a test panel was obtained. Each obtained test panel was left to stand at room temperature for 7 days, and then subjected to the evaluation test below. Evaluation results are described in Table 1 and Table 2.

[Removability (marker)]

Each test panel was stained by drawing a 10 mm × 10 mm square with an oil-based marker. For the oil-based marker at the time of staining, six types: "edding 850 permanent marker - red" (trade name, manufactured by edding AG, red marker), "edding 750 paint marker - black" (trade name, manufactured by edding AG, black marker), "Camlin Kokuyo Permanent Marker blue" (trade name, manufactured by Camlin Limited, blue marker), "Camlin Kokuyo Permanent Marker red" (trade name, manufactured by Camlin Limited, red marker), "Magic Ink Extra Wide, red" (trade name, manufactured by Teranishi Chemical Industry Co., Ltd., red marker), and "Magic Ink Extra Wide, black" (trade name, manufactured by Teranishi Chemical Industry Co., Ltd., black marker), were used. After staining with each marker and leaving to stand for 5 minutes, each test panel was sprayed evenly with "Strong Graffiti Remover spray" (trade name, manufactured by Asahipen Corporation, graffiti remover), and a dry Kimwipe (trade name) was used to wipe off the stained portion. This operation was defined as one cycle, and the same operation was repeated two more cycles on the same area as the portion stained in the first cycle. After the third cycle was completed, one more cycle of the same operation was carried out, where the time for leaving to stand after staining with a marker was increased to 24 hours.

After the above-mentioned staining/removal operations (three cycles of leaving to stand for 5 minutes and one cycle of leaving to stand for 24 hours), the portion on which staining/removal was carried out was observed and evaluated according to the following criteria. A and B are acceptable levels, where it can be said that a stain due to the marker could be easily and cleanly removed.

A: There is no color residue.
B: Slight color residue is confirmed.
C: Significant color residue is confirmed, and/or coating film is dissolved by graffiti remover.

[Removability (other than marker)]

A Kanto loam sintered product (JIS Test Powder 1 Class 7) specified in JIS Z8901:2006 was mixed with gear oil at a weight ratio of 1:1 to obtain a simulated staining liquid.

Red Can Curry Powder (manufactured by S&B Foods Inc.) and Nissin canola oil (manufactured by The Nissin OilliO Group, Ltd., edible rapeseed oil) were mixed at a weight ratio of 1:1 to obtain a curry staining liquid.

Nescafe Gold Blend (manufactured by Nestle Japan Limited, regular soluble coffee powder) and water were mixed at a weight ratio of 1:5 to obtain a coffee staining liquid.

Three pieces of cotton, each cut to a 30 mm square, were placed on a test panel, 5 ml of each staining liquid was dropped onto a respective piece of cotton, and the cotton and the coating film surface of the test panel were brought into sufficient contact. The entire contact surface was then covered with a polypropylene lid having a diameter of 60 mm and fixed with masking tape so that the staining liquid did not volatilize. After leaving the lid-covered test panel to stand at 50°C for 24 hours, the lid and cotton were removed from the test panel, and the test surface was thoroughly cleaned with tap water and new cotton.

From the coated surface appearance after cleaning, stain resistance against each staining liquid was evaluated on a three-level scale. A and B are acceptable levels, where it can be said that a stain due to each staining liquid could be easily and cleanly removed.

   A: There is no color residue.
   B: Slight color residue is confirmed.
   C: Significant color residue is confirmed.

[Repellency]

Each test panel was stained by drawing a 10 mm × 10 mm square with "edding 850 permanent marker - red" (trade name, manufactured by edding AG, red marker), and ink repellency level was evaluated. A and B are acceptable levels.

   A: Coated surface repels ink, and 50% or greater of the coated surface is visible.
   B: Coated surface slightly repels ink, and 10 to 50% of the coated surface is visible.
   C: Ink is not repelled, and coated surface is mostly not visible.

[Examples 1A and 1B]

Except that the drying conditions were changed as indicated in Table 3, the storage modulus, removability, and repellency were evaluated in the same manner as in Example 1. Results are shown in Table 3.

[Table 3]

Table 3

| Example | | Example 1 | Example 1A | Example 1B |
|---|---|---|---|---|
| Heat-curable coating composition | | X-1 | X-1 | X-1 |
| Drying condition | Heating temperature and heating time | 80°C 30 min | 80°C 30 min | 120°C 30 min |
| | Post-cure | - | 50°C 3 days | - |
| $E'_{min}$ [$10^7$ Pa] of coating film heat-cured at 80°C for 30 min | | 7.4 | 7.6 | 9.5 |

(continued)

| | | Example | Example 1 | Example 1A | Example 1B |
|---|---|---|---|---|---|
| Evaluation | Removability (marker) | edding 850 | B | B | A |
| | | edding 750 | A | A | A |
| | | Camlin blue | B | B | A |
| | | Camlin red | A | A | A |
| | | Magic Ink red | A | A | A |
| | | Magic Ink black | A | A | A |
| | Removability (other than marker) | Simulated staining liquid | A | - | - |
| | | Curry staining liquid | B | - | - |
| | | Coffee staining liquid | A | - | - |
| | Repellency | | A | A | A |

## Claims

1. A coating material kit for a heat-curable coating composition, comprising a base agent containing an acrylic polyol (A) having an alkoxysilyl group; and a curing agent containing a polyisocyanate compound (B) containing an isocyanurate trimer,
   wherein a minimum value $E'_{min}$ of storage modulus in a range of 40 to 200°C of a coating film formed by heat-curing the heat-curable coating composition obtained from the coating material kit at 80°C for 30 minutes and leaving the heat-curable coating composition to stand for 1 hour is $2.6 \times 10^7$ Pa or more.

2. The coating material kit according to claim 1, further containing at least one catalyst compound (C) selected from an amidine compound, a guanidine compound, a phosphazene compound, and an imidazole compound.

3. The coating material kit according to claim 1 or 2, further containing a silicone (D) modified with a hydroxyl group-containing resin.

4. The coating material kit according to any one of claims 1 to 3, further containing an organic solvent-dispersed type colloidal silica (E).

5. The coating material kit according to any one of claims 1 to 4, wherein the coating film has stain resistance.

6. A heat-curable coating composition comprising a base agent containing an acrylic polyol (A) having an alkoxysilyl group; and a curing agent containing a polyisocyanate compound (B) containing an isocyanurate trimer,
   wherein a minimum value $E'_{min}$ of storage modulus in a range of 40 to 200°C of a coating film formed by heat-curing the heat-curable coating composition at 80°C for 30 minutes and leaving the heat-curable coating composition to stand for 1 hour is $2.6 \times 10^7$ Pa or more.

7. A base agent for a heat-curable coating composition comprising the base agent containing an acrylic polyol (A) having an alkoxysilyl group; and a curing agent containing a polyisocyanate compound (B) containing an isocyanurate trimer, wherein a minimum value $E'_{min}$ of storage modulus in a range of 40 to 200°C of a coating film formed by heat-curing the heat-curable coating composition at 80°C for 30 minutes and leaving the heat-curable coating composition to stand for 1 hour is $2.6 \times 10^7$ Pa or more.

8. A coating film forming method, comprising a coating film forming step of coating an object to be coated with the heat-curable coating composition obtained from the coating material kit according to any one of claims 1 to 5, the heat-curable coating composition according to claim 6, or a heat-curable coating composition obtained by mixing the base agent according to claim 7 and a curing agent to form a wet coating film.

9. The coating film forming method according to claim 8, comprising a step of heat-curing the wet coating film at a temperature range of 50°C or higher and 120°C or lower.

**10.** The coating film forming method according to claim 8 or 9, wherein the object to be coated is at least one selected from an automobile, industrial machinery, construction machinery, a railway vehicle, a ship body, a building material, residential facility equipment, and a component of the aforementioned.

**11.** A coated article obtained by coating an object to be coated with the heat-curable coating composition obtained from the coating material kit according to any one of claims 1 to 5, the heat-curable coating composition according to claim 6, or a heat-curable coating composition obtained by mixing the base agent according to claim 7 and a curing agent.

## INTERNATIONAL SEARCH REPORT

| International application No. |
|---|
| **PCT/JP2024/017485** |

**A. CLASSIFICATION OF SUBJECT MATTER**

*C09D 175/04*(2006.01)i; *C09D 5/16*(2006.01)i; *C09D 7/61*(2018.01)i; *C09D 7/63*(2018.01)i; *C09D 183/10*(2006.01)i
FI:   C09D175/04; C09D7/63; C09D183/10; C09D7/61; C09D5/16

According to International Patent Classification (IPC) or to both national classification and IPC

**B. FIELDS SEARCHED**

Minimum documentation searched (classification system followed by classification symbols)

C09D175/04; C09D5/16; C09D7/61; C09D7/63; C09D183/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/131444 A1 (KANSAI PAINT CO., LTD.) 01 July 2021 (2021-07-01) claims, paragraphs [0066]-[0068], [0114], [0115], [0122], [0127], [0132], [0155], [0176], [0177], tables 10-13 | 1, 4-11 |
| Y | same as above | 2-3 |
| Y | WO 2019/049864 A1 (ORIGIN ELECTRIC CO., LTD.) 14 March 2019 (2019-03-14) claims, paragraph [0008] | 2-3 |
| Y | JP 2003-49116 A (KANSAI PAINT CO., LTD.) 21 February 2003 (2003-02-21) claims, paragraphs [0001], [0040] | 3 |

☐ Further documents are listed in the continuation of Box C.     ☑ See patent family annex.

| | |
|---|---|
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **02 July 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

# EP 4 711 429 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2021/131444 | A1 | 01 July 2021 | US | 2023/0063826 | A1 | |
| | | | | claims, paragraphs [0093]-[0095], [0159], [0160], [0167], [0172]-[0174], [0178], tables 10-13 | | | |
| | | | | EP | 4082675 | A1 | |
| | | | | CN | 114746523 | A | |
| WO | 2019/049864 | A1 | 14 March 2019 | US | 2021/0071030 | A1 | |
| | | | | claims, paragraph [0009] | | | |
| | | | | CN | 111051447 | A | |
| JP | 2003-49116 | A | 21 February 2003 | (Family: none) | | | |

International application No.

**PCT/JP2024/017485**

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021131444 A